# EUROPÄISCHE PATENTSCHRIFT

(11) **EP 3 207 683 B1**
(45) Veröffentlichungstag und Bekanntmachung des Hinweises auf die Patenterteilung: **12.02.2020**
(21) Anmeldenummer: 15817777.4
(22) Anmeldetag: 10.12.2015
(51) Int. Cl.: H04L 29/06

(54) **VERFAHREN UND VORRICHTUNG ZUM RÜCKWIRKUNGSFREIEN ERFASSEN VON DATEN**
METHOD AND APPARATUS FOR REPERCUSSION-FREE CAPTURE OF DATA
PROCÉDÉ ET DISPOSITIF DE DÉTECTION DE DONNÉES EXEMPTE DE RÉPERCUSSIONS

(30) Priorität: 18.12.2014 DE 102014226398
(43) Veröffentlichungstag der Anmeldung: 23.08.2017
(73) Patentinhaber: Siemens Mobility GmbH, 81739 München (DE)
(72) Erfinder: BLÖCHER, Uwe, 82178 Puchheim (DE); FALK, Rainer, 85586 Poing (DE); WIMMER, Martin, 85579 Neubiberg (DE)
(86) Internationale Anmeldenummer: PCT/EP2015/079245
(87) Internationale Veröffentlichungsnummer: WO 2016/096599

(56) Entgegenhaltungen:
- US-A1- 2010 162 399
- US-A1- 2013 268 994

## Beschreibung

Die Erfindung bezieht sich auf ein Verfahren und eine Vorrichtung zum rückwirkungsfreien Erfassen von Daten von mindestens einer Einrichtung, die in einem ersten Netzwerk mit hoher Sicherheitsanforderung angeordnet ist, in einem zweiten Netzwerk mit geringer Sicherheitsanforderung.

Sicherheitslösungen für die Übertragung von Daten zwischen Netzen mit unterschiedlichen Sicherheitsanforderungen, sogenannte Cross-Domain-Security-Lösungen, werden bislang für spezielle Bereiche, wie Behördenkommunikation, verwendet, in denen hohe Sicherheitsanforderungen gelten und in denen eine Sicherheitsklassifikation von Dokumenten bzw. Informationen vorliegt. Durch eine Cross-Domain-Lösung wird ein automatisierter sicherer Austausch von Dokumenten und Nachrichten, wie z.B. Emails, zwischen Zonen mit unterschiedlich hohen Sicherheitsanforderungen realisiert. Eine wesentliche Komponente ist dabei eine Datendiode, die eine Unidirektionalität der Datenkommunikation, also einen Transport von Daten lediglich in eine Richtung, sicherstellt.

Für die Kopplung von industriellen Steuerungsnetzen, die üblicherweise hohe Sicherheitsanforderungen haben, mit einem Büronetzwerk, einem öffentlichen Internet oder anderen Steuerungsnetzwerken, die üblicherweise nur geringen Sicherheitsanforderungen genügen, werden bisher herkömmliche Firewalls verwendet, die die Datenkommunikation nach konfigurierbaren Filterregeln filtern. Die Datenkommunikation wird dabei abhängig von den Adressen der Kommunikationspartner und dem verwendeten Kommunikationsprotokoll zugelassen oder blockiert.

Aus der WO 2012/170485 ist eine Cross-Domain-Security-Lösung auf Basis einer Virtualisierungslösung bekannt, bei der eine virtuelle Maschine den Informationstransfer zwischen zwei Informationsdomänen kontrolliert.

US 2010/162399 A1 offenbart ein Verfahren, eine Vorrichtung sowie ein Computerprogrammprodukt, das ein Netzwerk vor Schadsoftware schützt, indem xFlow Data innerhalb eines Netzwerks gesammelt und analysiert werden, um anomalen Verkehr zu erkennen und daraus auf das Vorhandensein von Schadsoftware schließen zu können. Dazu wird auf einem Netzwerkrouter ein xFlow Protokoll unterstützt, das Metadaten von Netzwerkdatenverkehr und zusätzlich einen Datenfluss, d.h. eine unidirektionale Folge von Paketen mit einem oder mehreren gleichen Parametern, wie beispielsweise IP Quell- bzw. Zieladresse, Quell-/Zielport, IP Protokoll usw. in einem xFlow Record aufzeichnet.

Des Weiteren ist ein Netzwerkauskoppler, auch Network Tap benannt, als Netzwerkkomponente bekannt, um übertragene Daten mithören zu können, ohne dass die übertragenen Daten beeinflusst werden. Solche Netzwerkauskoppler werden im Allgemeinen für eine Netzwerküberwachung eingesetzt, da hier Parameter, wie ein Durchsatz oder eine Latenz, nicht durch Messung beeinflusst werden.

Für Industrieumgebungen, wie beispielsweise für ein Bahnsicherungssystem, besteht der Bedarf, Diagnosedaten rückwirkungsfrei in dem sicherheitskritischen Netz zu erfassen und diese einem Diagnosenetzwerk, das üblicherweise in einem Netz mit geringeren Sicherheitsanforderungen realisiert ist, bereitzustellen. Dabei tritt insbesondere das Problem auf, dass eine Komponente zur Einwegdatenübertragung nicht aktiv das Anfragen einer Information in dem Netzwerk mit hoher Sicherheitsanforderung steuern oder beeinflussen kann. Im Beispiel des genannten Bahnsicherungssystems ist man darauf angewiesen, dass eine Kommunikation der erforderliche Daten ohne ihr Zutun stattfinden bzw. die erforderlichen.

Es ist somit die Aufgabe der vorliegenden Erfindung, ein Verfahren und eine Vorrichtung bereitzustellen, die sicherstellen, dass bestimmte Daten von ein oder mehrere Einrichtungen, die in einem Netz mit hoher Sicherheitsanforderung angeordnet sind, abgerufen und diese Daten in ein zweites Netzwerk übermittelt werden können, ohne vom zweiten Netzwerk aus diese Daten aktiv anfordern zu können.

Die Aufgabe wird durch die in den unabhängigen Ansprüchen beschriebenen Maßnahmen gelöst. In den Unteransprüchen sind vorteilhafte Weiterbildungen der Erfindung dargestellt.

Das erfindungsgemäße Verfahren zum rückwirkungsfreien Erfassen von Daten von mindestens einer Einrichtung, die in einem ersten Netzwerk mit hoher Sicherheitsanforderung angeordnet ist, in einem zweiten Netzwerk mit geringer Sicherheitsanforderung, weist als ersten Verfahrensschritt das Anfordern der Daten bei der mindestens einen Einrichtung entsprechend einem Anfrageprofil durch eine Anfrageeinheit auf, die innerhalb des ersten Netzwerks angeordnet ist. Anschließend erfolgt ein Mithören der von der mindestens einen Einrichtung auf die Anforderung an die Anfrageeinheit gesendeten Daten innerhalb des ersten Netzwerks durch eine Mithöreinheit und ein Übermitteln der Daten an eine Auswerteeinheit in dem zweiten Netzwerk. Dort werden die mitgehörten Daten mit den gemäß dem Anfrageprofil erwarteten Daten verglichen und ein Alarmsignal bereitgestellt, wenn die mitgehörten Daten von den gemäß dem Anfrageprofil erwarteten Daten abweichen. Die Mithöreinheit 21 kann Daten, die im ersten Netzwerk 11 übertragen werden, nur mithören und keinerlei Nachrichten an Einrichtungen 16.1, 16.2, 16.3 und auch keine Nachrichten an die Anfrageeinheit 14 senden.

Unter einem rückwirkungsfreien Erfassen von Daten ist hierbei zu verstehen, dass durch die Übertragung vom sicherheitsrelevanten ersten Netzwerk in das weniger sicherheitsrelevante zweite Netzwerk keinerlei Daten oder Störungen in das sicherheitsrelevante erste Netzwerk eingebracht werden.

Durch das Anfordern der Daten entsprechend einem vorgegebenen Anfrageprofil, das sowohl in der Anfrageeinheit als auch in der Auswerteeinheit bekannt ist, kann eindeutig festgestellt werden, ob alle benötigten Daten in das zweite Netzwerk übertragen wurden und somit eine korrekte Funktion gewährleistet werden. Durch das Bereitstellen eines Alarmsignals kann beispielsweise eine Fehlerrate bei der Anforderung und/oder dem Mithören und/oder der Übermittlung ermittelt und überwacht werden. Dies ist durch ein ausschließliches Mithören der Daten sichergestellt. Das Mithören kann hier beispielsweise durch einen Netzwerkauskoppler, also einem Network Tap, durchgeführt werden.

In einer vorteilhaften Ausführungsform des erfindungsgemäßen Verfahrens wird durch das Alarmsignal eine Alarmmeldung in der Auswerteeinheit und/oder in einer Diagnoseeinrichtung in einem Diagnosenetzwerk angezeigt. Zusätzlich oder alternativ dazu wird ein Eintrag in einem Überwachungsbericht, auch als Log-Datei bezeichnet, erstellt und/oder es wird eine aktive Reaktion in der Mithöreinheit oder in der Anfrageeinheit ausgelöst.

Dabei kann als aktive Reaktion beispielsweise das Initiieren eines Neustarts der Mithöreinheit angesehen werden oder beispielsweise eine Unterbrechung der Stromversorgung der Anfrageeinheit veranlasst werden, so dass ein Neustart der Anfrageeinheit erfolgt und Anfragen gemäß dem Anfrageprofil neu generiert werden. Somit kann eine Maßnahme zur Aufhebung einer Störung durchgeführt werden. Des Weiteren kann durch einen Eintrag in einen Überwachungsbericht oder durch eine Alarmmeldung die Funktionsfähigkeit der Anfrageeinheit und der Mithöreinheit kontinuierlich überwacht werden. So kann insbesondere ein Alarmsignal gesetzt werden, wenn unzulässig häufig angefragt wird, wenn zu selten angefragt wird, wenn erforderliche Daten nicht angefragt werden oder wenn unzulässige Daten angefragt werden.

In einer weiteren vorteilhaften Ausführungsform wird durch das Alarmsignal eine Weitergabe der mitgehörten Daten durch die Auswerteeinheit oder ein Auslesen der mitgehörten Daten aus der Auswerteeinheit blockiert.

Dies verhindert, dass falsche oder unzulässige Daten für die Auswertung und Diagnose berücksichtigt werden.

In einer Variante des erfindungsgemäßen Verfahrens weist das Anfrageprofil für unterschiedliche Datenarten und/oder für unterschiedliche Arten von Einrichtungen und/oder für einzelne Einrichtungen selbst unterschiedliche Anfrageregeln auf.

Dadurch können aussagekräftige Diagnosewerte abhängig von den unterschiedlichen Datenarten und/oder den Eigenschaften der einzelnen Einrichtungen oder Einrichtungsarten generiert und ausgewertet werden. So können beispielsweise jeweils gleiche Anfrageregeln für gleiche Einrichtungsarten, wie beispielsweise Bahnschranken, oder gleiche Anfrageregeln für alle Zugsignale bzw. Ampeln eingestellt werden.

In einer weiteren Variante weist das Anfrageprofil für unterschiedliche Datenarten und/oder für unterschiedliche Einrichtungsarten und/oder für die einzelnen Einrichtungen selbst ein einheitliches Anfrageregel auf.

Dies ermöglicht es, eine einfach aufgebaute und wenig komplexe Anfrageeinheit zu verwenden. Die Anfrageeinheit kann aber auch in einen Modus mit einheitlichem Anfrageregel übergehen, wenn beispielsweise die Anzahl von als fehlerhaft ermittelten Daten zunimmt, sodass eine Notdiagnosemöglichkeit aufrecht erhalten werden kann.

In einer Variante des erfindungsgemäßen Verfahrens werden die mitgehörten Daten in der Auswerteeinheit zwischengespeichert und erst nach einer erfolgreichen Überprüfung an die Diagnoseeinrichtung übermittelt.

In einer Variante des erfindungsgemäßen Verfahrens liegt eine erfolgreiche Überprüfung dann vor, wenn die mitgehörten Daten dem Anfrageprofil entsprechen und/oder wenn die mitgehörten Daten eine gültige kryptographische Prüfsumme aufweisen.

Dies hat den Vorteil, dass nur relevante und/oder mit unverändertem Inhalt übertragene und von einer erlaubten, authorisierten Einrichtung übertragene Daten zur Auswertung weitergeleitet und damit berücksichtigt werden.

In einer Variante des erfindungsgemäßen Verfahrens wird bei einer nicht erfolgreichen Überprüfung ein Ersatzwert oder eine Fehlermeldung an die Diagnoseeinrichtung übermittelt.

Dies erlaubt trotz einem verfälschten oder nicht relevanten Datenwert eine möglichst gute und kontinuierliche Auswertung, insbesondere durch die Verwendung eines Ersatzwertes. Bei der Meldung eines Fehlers kann insbesondere einfach die Fehlerrate ermittelt werden.

In einem weiteren Ausführungsbeispiel des erfindungsgemäßen Verfahrens wird den mitgehörten Daten nach einer Überprüfung in der Auswerteeinheit eine Gültigkeitsinformation zugeordnet.

Dies ermöglicht eine Bewertung der Daten auch bei längerer Speicherung bzw. vereinfacht ein Verwalten der mitgehörten Daten, indem beispielsweise der Datensatz nach Ablauf einer Gültigkeitsdauer archiviert oder gelöscht wird.

In einer Variante des erfindungsgemäßen Verfahrens werden die mitgehörten Daten nur dann an den Diagnoserechner übermittelt, wenn die mitgehörten Daten in einem vorbestimmten zeitlichen Abstand nach der zugeordneten Anfrage in der Auswerteeinheit empfangen wurden.

Dadurch wird die Anzahl von erfassten Daten, die nicht zu einem aktuellen Anfrageprofil gehören, reduziert. Des Weiteren können damit Daten, die von einer nicht zulässigen Einrichtung bzw. einem Angreifer im ersten Netz eingebracht wurden, zumindest teilweise erkannt werden und nicht für die Auswertung herangezogen werden.

Die erfindungsgemäße Vorrichtung zum rückwirkungsfreien Erfassen von Daten von mindestens einer Einrichtung, die in einem ersten Netz mit hoher Sicherheitsanforderung angeordnet ist, in einem zweiten Netzwerk mit geringer Sicherheitsanforderung, enthält eine Anfrageeinheit, die innerhalb des ersten Netzwerks angeordnet und derart ausgebildet ist, Daten bei der mindestens einen Einrichtung entsprechend einem Anfrageprofil anzufordern. Sie enthält eine Mithöreinheit, die innerhalb des ersten Netzwerks angeordnet ist und derart ausgebildet ist, Daten die von der mindestens einen Einrichtung auf die Anforderung gesendet wurden, mitzuhören und an eine Auswerteeinheit zu übermitteln. Die Vorrichtung umfasst des Weiteren eine Auswerteeinheit, die in dem zweiten Netzwerk angeordnet und derart ausgebildet ist, die mitgehörten Daten mit den gemäß dem Anfrageprofil erwarteten Daten zu vergleichen und eine Alarmeinheit, die derart ausgebildet ist, ein Alarmsignal bereitzustellen, wenn die mitgehörten Daten von den gemäß dem Anfrageprofil erwarteten Daten abweichen.

Die Vorrichtung ermöglicht es somit, gezielt Daten durch eine Anfrage in der Einrichtung zu stimulieren und die Daten nach Übertragung in das zweite weniger sichere Netzwerk mit dem gleichen Anfrageprofil, das in der Auswerteeinheit bekannt ist, zu vergleichen und somit sicherzustellen, dass eine zuverlässige Auswertung der Daten möglich ist.

In einer vorteilhaften Ausführungsform der erfindungsgemäßen Vorrichtung ist die Mithöreinheit und/oder die Anfrageeinheit derart ausgebildet, ein Alarmsignal zu erkennen und sich daraufhin selbständig neu zu starten oder die Auswerteeinheit derart ausgebildet ist, nach Erkennen des Alarmsignals eine Weitergabe oder ein Auslesen der mitgehörten Daten zu blockieren.

In einer Variante der erfindungsgemäßen Vorrichtung ist die Auswerteeinheit derart ausgebildet, mitgehörte Daten abzuspeichern, eine Überprüfung der Daten durchzuführen und erst nach einer erfolgreichen Überprüfung die Daten an eine Diagnoseeinrichtung zu übermitteln.

In einer weiteren Variante der erfindungsgemäßen Vorrichtung ist die Auswerteeinheit derart ausgebildet, zu überprüfen, ob die mitgehörten Daten dem Anfrageprofil entsprechen und/oder oder die mitgehörten Daten eine gültige kryptographische Prüfsumme aufweisen, und lediglich die erfolgreich überprüften Daten an die Diagnoseeinrichtung zu übermitteln oder bei einer nicht erfolgreichen Überprüfung einen Ersatzwert oder eine Fehlernachricht an die Diagnoseeinrichtung zu übermitteln.

Des Weiteren wird ein Computerprogrammprodukt mit Programmbefehlen zur Ausführung des vorgenannten Verfahrens beansprucht.

Die Erfindung wird durch die beigefügten Ansprüche bestimmt.

Ausführungsbeispiele des erfindungsgemäßen Verfahrens und der erfindungsgemäßen Vorrichtung sind in den Zeichnungen beispielhaft dargestellt und werden anhand der nachfolgenden Beschreibung näher erläutert. Es zeigen:
- Figur 1: ein Ausführungsbeispiel des erfindungsgemäßen Verfahrens in Form eines Ablaufdiagramms;
- Figur 2: ein erstes Ausführungsbeispiel der erfindungsgemäßen Vorrichtung in einer beispielhaften Automatisierungsumgebung in schematischer Darstellung; und
- Figur 3: ein zweites Ausführungsbeispiel der erfindungsgemäßen Vorrichtung mit in einer Auswerteeinheit zwischengespeicherten Daten in schematischer Darstellung.

Einander entsprechende Teile sind in allen Figuren mit den gleichen Bezugszeichen versehen.

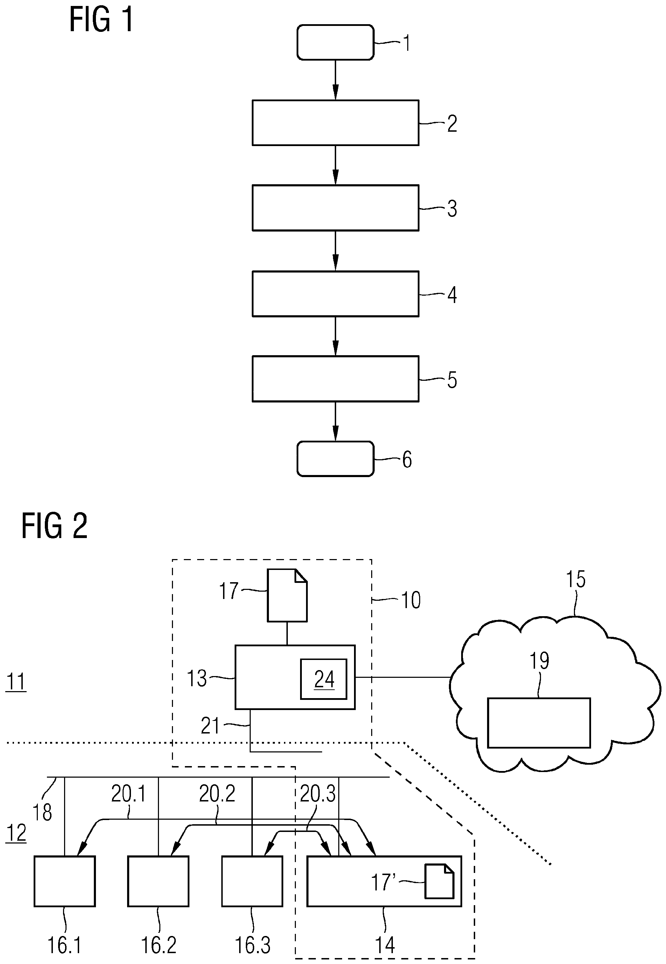

Anhand eines Ablaufdiagramms in Figur 1 wird nun das erfindungsgemäße Verfahren näher erläutert. Im Ausgangszustand 1 liegen ein erstes Netzwerk mit hohen Sicherheitsanforderungen sowie ein zweites Netzwerk mit geringen Sicherheitsanforderungen vor. Daten, die im ersten Netzwerk übertragen werden, sollen nun rückwirkungsfrei, d.h. ohne die im ersten Netzwerk übertragenen Daten zu verändern, neue Daten im ersten Netzwerk zu generieren oder sonstigen Einfluss auf dieses erste Netzwerk auszuüben, in das zweite Netzwerk übermittelt werden. Die Daten werden im ersten Netzwerk von mindestens einer Einrichtung erzeugt und geben beispielsweise Auskunft über den Betriebszustand der einen oder der mehreren Einheiten. Des Weiteren befindet sich im ersten Netzwerk eine Mithöreinheit, die beispielsweise als Netzwerkauskoppler oder als Datendiode sonstiger Bauart ausgebildet ist. Die im ersten Netzwert übertragenen Daten werden beispielsweise dupliziert und das Duplikat an Komponenten im zweiten Netzwerk, insbesondere an eine Auswerteeinheit übermittelt.

Im ersten Netzwerk befindet sich außerdem eine Anfrageeinheit, die ein Anfrageprofil aufweist, das beispielsweise vorbestimmte Anfragen und ein Zeitschema, wann diese Anfragen an die Einrichtungen im ersten Netzwerk verschickt werden sollen, enthält. Das gleiche Anfrageprofil liegt einer Auswerteeinheit, die im zweiten Netzwerk angeordnet ist, vor. Im ersten Verfahrensschritt 2 werden innerhalb des ersten Netzwerks von der Anfrageeinheit Daten bei der mindestens einen Einrichtung entsprechend dem Anfrageprofil, das in der Anfrageeinheit gespeichert ist, angefordert. Dieses Anfordern kann beispielsweise durch das Aussenden von Anfragenachrichten, auch Request-Nachrichten, erfolgen, die entweder direkt an einzelne Einrichtungen adressiert sind oder als Multicast- oder Broadcast-Nachrichten von mehreren Einrichtungen empfangen und ausgewertet werden. Als Reaktion auf diese Anfragenachrichten sendet die eine oder die mehreren Einrichtungen die angeforderten Daten an die Anfrageeinheit beispielsweise in Antwortnachrichten zurück.

Die zurückgesandten Daten werden nun im Verfahrensschritt 3 durch eine Mithöreinheit innerhalb des ersten Netzwerks mitgehört und an eine Auswerteeinheit im zweiten Netzwerk übermittelt. Dabei kann die Mithöreinheit beispielsweise selbst lediglich diejenigen Antwortnachrichten der Einrichtungen in das zweite Netzwerk übermitteln, die einer Antwort auf die gesandten Anfragenachrichten entsprechen. Es kann aber auch der gesamte Datenverkehr, der von einer Einrichtung gesendet und an die Anfrageeinheit adressiert ist, mitgehört werden. Es kann aber auch lediglich der Datenverkehr oder die bestimmte Nachrichtenart von der Mithöreinheit mitgehört bzw. ausgewertet werden, die in einem vorbestimmten Zeitintervall nach dem Versenden der Anfragenachricht von der Einrichtung an die Anfrageeinheit gesendet wird.

Insbesondere durch die Einschränkung der Mithörzeit auf ein Zeitintervall nach der ausgesendeten Anfragenachricht kann verhindern, dass eine nicht auf eine aktuelle Anfrage zurückgesendete Antwortnachricht, im Format aber einer Antwort auf die Anfragenachricht gleiche Nachricht, erfasst wird. Solche Antwortnachrichten und die entsprechend enthaltenen Daten verfälschen somit nicht eine spätere Auswertung.

In der Auswerteeinheit werden anschließend im Verfahrensschritt 4 die mitgehörten Daten mit den gemäß dem Anfrageprofil erwarteten Daten verglichen. D.h. es werden beispielsweise die Antwortnachrichten mit den ausgesandten Anfragenachrichten verglichen und lediglich wenn zu einer Antwortnachricht eine Anfragenachricht ermittelt werden kann, wird die Antwortnachricht akzeptiert.

Weichen die mitgehörten Daten bzw. Antwortnachrichten von den gemäß dem Anfrageprofil erwarteten Daten bzw. Antwortnachrichten ab, wird ein Alarmsignal von der Auswerteeinheit, siehe Verfahrensschritt 5, bereitgestellt. Dabei kann bei einer einzigen Abweichung, also wenn bereits für eine Antwortnachricht keine zugehörige Anfragenachricht gefunden werden kann, ein Alarmsignal bereitgestellt werden oder aber es können auch vorbestimmte Schwellwerte im Bezug auf eine maximale Anzahl von abweichenden Daten definiert werden und erst nach Überschreiten des Schwellwerts wird ein Alarmsignal bereitgestellt.

Als Reaktion auf das Alarmsignal kann eine Alarmmeldung in der Auswerteeinheit und/oder in einer Diagnoseeinrichtung, an die die Daten beispielsweise zur weiteren Auswertung übermittelt werden, angezeigt werden. Es kann aber auch durch das Alarmsignal ein Eintrag in einem Überwachungsbericht, einem sogenannten Logfile, in der Mithöreinrichtung oder in der Auswerteeinheit oder aber in der Diagnoseeinrichtung erstellt werden. Es kann auch eine Fehlermeldung für Bedienpersonal, beispielsweise in Form eines Warntons oder eines Lichtsignals oder einer Anzeige auf einem Überwachungsmonitor erzeugt werden. Es ist weiterhin möglich, eine aktive Reaktion auf das Alarmsignal anzustoßen. So kann z.B. der Neustart der Anfrageeinheit beispielsweise durch Unterbrechen der Stromversorgung erfolgen. Dies erlaubt somit einen indirekten Zugriff auf Komponenten im ersten Netzwerk. Dadurch kann der Anfrageprozess, also das Aussenden von Anfragenachrichten in der Anfrageeinheit, neu initiiert werden. Auch ist es möglich, abhängig vom Alarmsignal mitgehörte Daten weiterzugeben oder zu blockieren bzw. einen Lesezugriff auf mitgehörte Daten aus der Auswerteeinheit zuzulassen oder zu unterbinden.

Das Anfrageprofil kann für unterschiedliche Arten beobachteter Kommunikation unterschiedliche Anfrageregeln definieren. Beispielsweise sind im Anfrageprofil für verschiedene Datenarten und/oder für unterschiedliche Arten von Einrichtungen, wie z.B. für unterschiedliche Gerätearten und/oder für die einzelnen Einrichtungen selbst, unterschiedliche Anfrageregeln enthalten, so kann beispielsweise für alle Bahnschranken in einem Eisenbahnsteuerungsnetz ein längeres Abfrageintervall im Anfrageprofil eingetragen sein als beispielsweise für eine Signalanlage.

Andererseits kann das Anfrageprofil auch eine einheitliche Anfrageregel für unterschiedliche Datenarten, unterschiedliche Einrichtungsarten oder für die einzelnen Einrichtungen selbst enthalten. Ein solches einfaches Schema kann beispielsweise auch durch wenig komplexe Anfrageeinheiten unterstützt werden.

Insbesondere können mitgehörte Daten in der Mithöreinheit bzw. in der Auswerteeinheit zwischengespeichert werden. Vor einer Weitergabe bzw. einem Auslesen von Daten aus der Auswerteeinheit und einer Übermittlung an die Diagnoseeinheit werden die mitgehörten Daten erst überprüft. Eine Überprüfung kann einerseits bezüglich des Anfrageprofils durchgeführt werden. Es kann aber auch eine kryptographische Prüfsumme, die von den Einrichtungen selbst über die gesendeten Daten bzw. Antwortnachrichten gebildet wurden und mit der Antwortnachricht an die Anfrageeinheit übermittelt wurden, auf ihre Gültigkeit überprüft werden. Dazu muss in der Auswerteeinheit jedoch ein in der Einrichtung verwendeter kryptographischer Schlüssel oder bei einem asymmetrischen kryptographischen System beispielsweise ein öffentlicher Schlüssel passend zu einem privaten Schlüssel der Einrichtung vorliegen.

Verläuft eine solche Überprüfung nicht erfolgreich, wird vorzugsweise ein Ersatzwert oder eine Fehlermeldung an die Diagnoseeinheit übermittelt. Es wird somit überprüft, ob die zwischengespeicherten Daten auf eine Art ermittelt wurden, welche dem vorgegebenen Anfrageprofil entsprechen. Nach der Übermittlung der Daten ist das Verfahren im Verfahrensschritt 6 abgeschlossen.

Das beschriebene Verfahren ermöglicht es, eine korrekte Funktionsweise der Datenübertragung sicherzustellen, ohne einen direkten Zugriff auf Komponenten im ersten, sicherheitsrelevanten Netzwerk zu benötigen. Wird eine Abweichung der ermittelten Daten vom vorbestimmten Anfrageprofil festgestellt, so ist dies ein Hinweis auf eine fehlerhafte Erfassung beispielsweise von Diagnosedaten und ermöglicht es, einerseits solche Daten als nicht korrekt zu erkennen und dies in der Bewertung und Aussagekraft der Daten zu berücksichtigen. Außerdem können Maßnahmen zur Behebung eines solchen Fehlers veranlasst werden.

In Figur 2 wird nun eine entsprechende Vorrichtung 10 zum rückwirkungsfreien Erfassen von Daten mittels einer Einwegkommunikation am Beispiel eines Betriebssicherungsnetzes beschrieben. Bei dem Betriebssicherungsnetz kann es sich um ein Bahnautomatisierungsnetzwerk, ein Fahrzeugsteuerungsnetzwerk, ein Energieautomatisierungsnetzwerk, ein Fertigungsautomatisierungsnetzwerk, ein Prozessautomatisierungsnetzwerk oder Ähnliches handeln. Das in Figur 2 dargestellte erste Netzwerk 12 entspricht dabei dem Betriebssicherungsnetz, das hohe Sicherheitsanforderungen bezüglich einer Datenübertragung und einer Zugangsberechtigung aufweist. Einrichtungen 16.1, 16.2, 16.3 in einem solchen Betriebssicherheitsnetz können insbesondere Steuerrechner und Feldgeräte mit angebundenen Sensoren bzw. Aktoren sein. Diese sind über das erste Netzwerk 12 mit hohen Sicherheitsanforderungen, beispielsweise über Verbindungsleitungen 18 oder auch über drahtlose Kommunikationsverbindungen, beispielsweise einem WLAN, miteinander verbunden. Die Einrichtungen 16.1, 16.2, 16.3 kommunizieren beispielsweise über ein Maschine-zu-Maschine-Protokoll (M2M), wie eine von der OPC-Organisation spezifizierte OPC-einheitliche Architektur, kurz OPC UA genannt, die spezifische Nachrichten zur Übertragung beispielsweise von Zustands- oder Alarmmeldungen zwischen Industrienetzwerken spezifiziert.

Im dargestellten Beispiel werden nun beispielsweise Diagnosedaten der Einrichtungen 16.1, 16.2, 16.3 von der Vorrichtung 10 aus dem ersten Netzwerk 12 rückwirkungsfrei ausgelesen und an eine Diagnoseeinrichtung 19 in einem Diagnosenetz 15, das in einem zweiten Netzwerk 11 mit geringeren Sicherheitsanforderungen angeordnet ist, übertragen. Die Vorrichtung 10 enthält eine Anfrageeinheit 14, eine Mithöreinheit 21, eine Auswerteeinheit 13 sowie eine Alarmeinheit 24.

Die Anfrageeinheit 14 ist im ersten Netzwerk 12 angeordnet und sendet Anfragen an die verschiedenen Einrichtungen 16.1, 16.2, 16.3. Die Anfrageeinheit 14 sendet diese Anfragen, beispielsweise OPC UA Anfragenachrichten, gemäß einem vorgegebenen Anfrageprofil 17' aus. Das Anfrageprofil 17' kann beispielsweise durch einen Servicetechniker in die Anfrageeinheit 14 eingebracht worden sein oder aber bei der Herstellung oder der Installation in das erste Netzwerk 12 in die Anfrageeinheit 14 konfiguriert worden sein.

Nach dem Empfang einer solchen Anfragenachricht in der Einrichtung 16.1, 16.2, 16.3 antwortet die Einrichtung 16.1, 16.2, 16.3 mit einer Antwortnachricht, auch Response genannt. Diese Antwortnachrichten oder auch die darin enthaltene Information entsprechen den bereits genannten Daten.

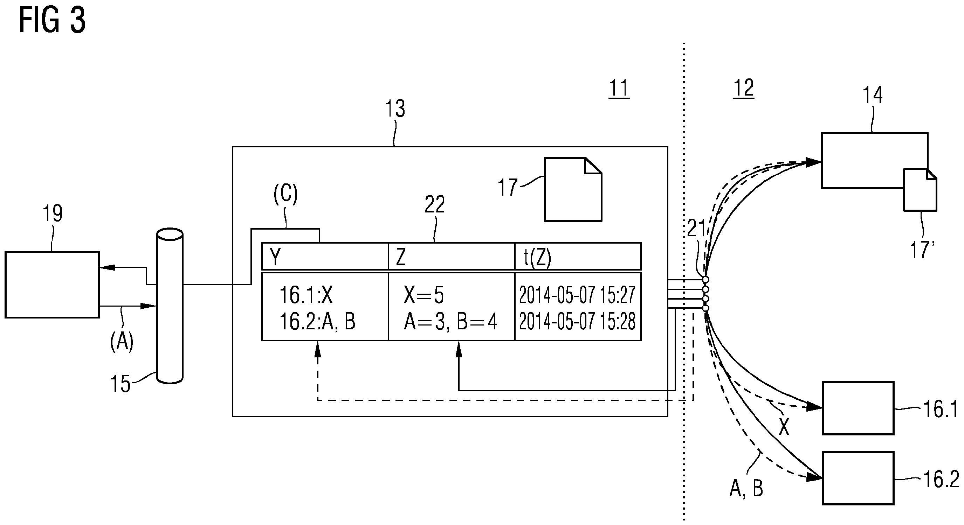

Die Einwegkommunikation wird durch die Mithöreinheit 21 aus dem ersten Netzwerk 12 durch Mithören des Datenverkehrs beispielsweise auf der Verbindungsleitung 18 ausgelesen und an die Auswerteeinheit 13, übertragen. Die Auswerteeinheit 13 ist bevorzugter Weise bereits im zweiten Netzwerk 11, wie beispielsweise einem Büronetz mit geringeren Sicherheitsanforderungen, angeordnet. Die Grenze zwischen dem ersten 12 und dem zweiten Netzwerk 11 ist durch die gepunktete Linie in Figur 2 und ebenfalls in Figur 3 dargestellt.

Die Mithöreinheit 21 kann Daten, die im ersten Netzwerk 11 übertragen werden, nur mithören, um eine Rückwirkungsfreiheit zu gewährleisten. Sie kann keinerlei Nachrichten an Einrichtungen 16.1, 16.2, 16.3 und auch keine Nachrichten an die Anfrageeinheit 14 senden. Sie kann beispielsweise den gesamten auf der Verbindungsleitung 18 übertragenen Datenverkehr oder nur Nachrichten der OPC UA Kommunikation mithören, die von der Anfrageeinheit 14 angefragt wurden.

Die Auswerteeinheit 13 im zweiten Netz 11 prüft den mitgehörten Datenverkehr bzw. die Nachrichten der OPC UA Kommunikation gegen ein Anfrageprofil 17, das dem Anfrageprofil 17' in der Anfrageeinheit 14 entspricht. Abhängig davon, ob die mitgehörte OPC UA Kommunikation diesem Anfrageprofil entspricht, werden die mitgehörten Daten dem Diagnoserechner 19 bereitgestellt. Insbesondere kann dadurch erreicht werden, dass nur mitgehörte Daten, die dem Anfrageprofil 17, 17' entsprechen, weitergeleitet werden. Dadurch kann insbesondere unterbunden werden, dass unzulässige oder veraltete Kommunikation weitergereicht wird. Auch kann erreicht werden, dass Daten nur weitergegeben werden, wenn eine zugehörige Anfragenachricht 20.1, 20.2, 20.3 beobachtet wurde.

Die Auswerteeinheit weist im hier dargestellten Ausführungsbeispiel eine integrierte Alarmeinheit 24 auf, die im Falle einer nicht erfolgreichen Überprüfung der mitgehörten Daten ein Alarmsignal bereitstellt. Das Alarmsignal kann in der Auswerteeinheit 13 selbst, beispielsweise als Eintrag in einem Überwachungsbericht der Auswerteeinheit 13, umgesetzt werden. Das Alarmsignal kann aber auch die Generierung eine Fehlermeldung, die an die Diagnoseeinheit 19 geschickt wird auslösen.

Die Diagnoseeinrichtung 19 kann Anfragen an die Auswerteeinheit 13 beispielsweise ebenfalls über eine OPC UA Anfrage stellen. Dies wird üblicherweise als ein Nachrichten-Pull bezeichnet. Abhängig davon, ob eine geeignete, das Anfrageprofil 17, 17' erfüllende Datenkommunikation beobachtet wurde, werden die entsprechenden Daten bereitgestellt. Bei einer Verletzung des Anfrageprofils 17, 17' kann ein Ersatzwert oder ein Fehler zurückgemeldet werden. Ebenso können die Daten aktiv durch die Auswerteeinheit 13 der Diagnoseeinheit 19 bereitgestellt werden. Dies wird auch als Push-Modus bezeichnet.

Zur Unterstützung des Pull-Mechanismus kann die Auswerteeinheit 13 mitgehörte Daten aus dem ersten Netzwerk 12 zwischenspeichern. Dies wird nun anhand einer vergrößerten Darstellung der Auswerteeinheit 13 in Figur 3 beschrieben.

Mitgehörte Daten, hier beispielsweise die OPC UA Kommunikationseinträge, können beispielsweise in einem lokalen Datenspeicher 22 vorgehalten werden. Dabei wird beispielsweise jede Anfragenachricht X, A, B in der Spalte Y zusammen mit der Information, an wen die Anfragenachricht gerichtet war, aufgezeichnet. In der Spalte Z werden die in einer Antwortnachricht an die Anfrageeinheit 14 zurückgemeldeten Antwortnachrichten bzw. Daten gespeichert. In der Spalte t(Z) wird die Empfangszeit der Antwortnachricht registriert. Die in dem lokalen Datenspeicher 22 aufgezeichneten Anfragenachrichten X, A,B sind im rechten Teil der Figur 3, der das erste Netzwerk 11 darstellt, von der Anfrageeinheit 14 an die Einrichtungen 16. 1, 16.2 als Anfragenachricht A, B, X eingezeichnet. Die entsprechenden Antwortnachrichten sind zur besseren Übersicht ohne eigenes Bezugszeichen eingezeichnet. Die Antwortnachrichten und/oder auch die Anfragenachrichten werden über die Mithöreinheit 21 in dem ersten Netzwerk 12 beispielsweise von Verbindungsleitungen abgegriffen.

In der Auswerteeinheit 13, die beispielsweise im zweiten Netz 11 angeordnet ist, können nun diese tatsächlich erfolgten Anfragenachrichten und Antwortnachrichten mit dem Anfrageprofil 17 verglichen werden. Ebenso kann über die Detektionszeit der Antwortnachricht ermittelt werden, ob die Antwortnachricht in einem vorgegebenen Zeitfenster nach einem Sendezeitpunkt der Anfragenachricht empfangen wurde. Stimmen die Anfragenachrichten mit dem vorbestimmten Anfrageprofil 17, 17' überein und/oder sind die dazugehörenden Antwortnachrichten in dem vorgegebenen Zeitintervall empfangen worden, so werden diese beispielsweise über ein Diagnosenetzwerk 15 an die Diagnoseeinrichtung 19 übermittelt. Von der Diagnoseeinrichtung 19 können detektiert Daten von der Auswerteeinheit 13 abgefragt werden. Es kann die Auswerteeinheit 13 aber auch selbsttätig Diagnosedaten beispielsweise in einem vorgegebenen zeitlichen Abstand an die Diagnoseeinrichtung 19 senden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt. Insbesondere ist die Erfindung nicht auf das als Beispiel verwendete Diagnosenetzwerk beispielsweise eines Bahnsicherungssystems beschränkt, sondern kann auch in sonstigen Industrieumgebungen eingesetzt werden.

Dabei kann die Anfrageeinheit 14 auch als physisch separate Einheit von der Mithör-, der Auswerte- sowie der Alarmeinheit ausgebildet sein. Die Mithöreinheit 21 kann ebenfalls als physisch separate Einheit oder aber integriert mit der Auswerteeinheit 13 und die Alarmeinheit 24 ausgebildet sein.

## Patentansprüche

1. Verfahren zum Erfassen von Daten von mindestens einer Einrichtung (16.1, 16.2, 16.3), die in einem ersten Netzwerk (12) mit hoher Sicherheitsanforderung angeordnet ist, in einem zweiten Netzwerk (11) mit geringer Sicherheitsanforderung, durch eine Vorrichtung enthaltend eine Anfrageeinheit (14), eine Mithöreinheit (21), eine Auswerteeinheit (13) und eine Alarmeinheit (24), mit den Verfahrensschritten:
- Anfordern (2) der Daten bei der mindestens einen Einrichtung (16.1, 16.2, 16.3) entsprechend einem Anfrageprofil (17) durch die Anfrageeinheit (14), die innerhalb des ersten Netzwerks (12) angeordnet ist,
- Mithören (3) der von der mindestens einen Einrichtung (16.1, 16.2, 16.3) auf die Anforderung an die Anfrageeinheit (14) gesendeten Daten innerhalb des ersten Netzwerks (12) durch die Mithöreinheit (21), die innerhalb des ersten Netzwerks (12) angeordnet ist, und Übermitteln der Daten an die Auswerteeinheit (13) die in dem zweiten Netzwerk (11) angeordnet ist,
- Vergleichen (4) der mitgehörten Daten mit dem gemäß dem Anfrageprofil (17, 17') erwarteten Daten durch die Auswerteeinheit, und
- Bereitstellen (5) eines Alarmsignals durch die Alarmeinheit, wenn die mitgehörten Daten von den gemäß dem Anfrageprofil (17, 17') erwarteten Daten abweichen,
wobei das Anfrageprofil (17, 17') vorbestimmte Anfragen und ein Zeitschema, wann diese Anfragen an die mindestens eine Einrichtung im ersten Netzwerk verschickt werden sollen, enthält, die Mithöreinheit (21) Daten, die im ersten Netzwerk (11) übertragen werden, nur mithören und keinerlei Nachrichten an die Einrichtungen (16.1, 16.2, 16.3) und auch keine Nachrichten an die Anfrageeinheit (14) senden kann, und die Auswerteeinheit (13) die mitgehörten Daten gegen ein Anfrageprofil (17), das dem Anfrageprofil (17') in der Anfrageeinheit (14) entspricht, prüft und nur mitgehörte Daten, die dem Anlageprofil (17, 17') entsprechen, an einen in dem zweiten Netzwerk (11) angeordneten Diagnoserechner (19) weiterleitet.

2. Verfahren nach Anspruch 1, wobei durch das Alarmsignal eine Alarmmeldung in der Auswerteeinheit (13) und/oder in einer Diagnoseeinrichtung (19) in einem Diagnosenetzwerk (15) angezeigt wird und/oder ein Eintrag in einen Überwachungsbericht erstellt wird und/oder eine aktive Reaktion in der Mithöreinheit (21) und/oder eine aktive Reaktion in der Anfrageeinheit (14) ausgelöst wird.

3. Verfahren nach Anspruch 2, wobei durch das Alarmsignal eine Weitergabe der mitgehörten Daten durch die Auswerteeinheit (13) oder ein Auslesen der mitgehörten Daten aus der Auswerteeinheit (13) blockiert wird.

4. Verfahren nach einem der Ansprüche 1 bis 3, wobei das Anfrageprofil (17) für unterschiedliche Datenarten und/oder für unterschiedliche Arten von Einrichtungen und/oder für einzelne Einrichtungen (16.1, 16.2, 16.3) unterschiedliche Anfrageregeln aufweist.

5. Verfahren nach einem der Ansprüche 1 bis 4, wobei das Anfrageprofil (17) für unterschiedliche Datenarten und/oder für unterschiedliche Einrichtungsarten und/oder für die einzelnen Einrichtungen selbst (16.1, 16.2, 16.3) eine einheitliche Anfrageregel aufweist.

6. Verfahren nach einem der Ansprüche 2 bis 5, wobei die mitgehörten Daten in der Auswerteeinheit (13) zwischengespeichert werden und erst nach einer erfolgreichen Überprüfung an die Diagnoseeinrichtung (19) übermittelt werden.

7. Verfahren nach Anspruch 6, wobei eine erfolgreiche Überprüfung dann vorliegt, wenn die mitgehörten Daten dem Anfrageprofil (17, 17') entsprechen und/oder wenn die mitgehörten Daten eine gültige kryptographische Prüfsumme aufweisen.

8. Verfahren nach Anspruch 6 oder 7, wobei bei einer nicht erfolgreichen Überprüfung ein Ersatzwert oder eine Fehlermeldung an die Diagnoseeinrichtung (19) übermittelt wird.

9. Verfahren nach einem der Ansprüche 1 bis 8, wobei den mitgehörten Daten in der Auswerteeinheit (13) nach einer Überprüfung eine Gültigkeitsinformation zugeordnet wird.

10. Verfahren nach einem der Ansprüche 1 bis 9, wobei die mitgehörten Daten nur dann an den Diagnoserechner (19) übermittelt werden, wenn die mitgehörten Daten in einem vorbestimmten zeitlichen Abstand nach der zugeordneten Anfrage in der Auswerteeinheit (13) empfangen wurde.

11. Vorrichtung zum Erfassen von Daten von mindestens einer Einrichtung (16.1, 16.2, 16.3), die in einem ersten Netzwerk (12) mit hoher Sicherheitsanforderung angeordnet ist, in einem zweiten Netzwerk (11) mit geringer Sicherheitsanforderung, enthaltend
- eine Anfrageeinheit (14), die innerhalb des ersten Netzwerks (12) angeordnet und derart ausgebildet ist, Daten bei der mindestens einen Einrichtung (16.1, 16.2, 16.3) entsprechend einem Anfrageprofil (17, 17') anzufordern,
- eine Mithöreinheit (21), die innerhalb des ersten Netzwerks (12) angeordnet ist und derart ausgebildet ist, Daten, die von der mindestens einen Einrichtung (16.1, 16.2, 16.3) auf die Anforderung gesendet wurden, mitzuhören und an eine Auswerteeinheit (13) zu übermitteln und keinerlei Nachrichten an die Einrichtungen (16.1, 16.2, 16.3) und auch keine Nachrichten an die Anfrageeinheit (14) zu senden,
- eine Auswerteeinheit (13), die in dem zweiten Netzwerk (11) angeordnet und derart ausgebildet ist, die mitgehörten Daten mit dem gemäß dem Anfrageprofil (17, 17') erwarteten Daten zu vergleichen, und die mitgehörten Daten gegen ein Anfrageprofil (17), das dem Anfrageprofil (17') in der Anfrageeinheit (14) entspricht, prüft und nur mitgehörte Daten, die dem Anlageprofil (17, 17') entsprechen, an einen in dem zweiten Netzwerk angeordneten Diagnoserechner (19) weiterzuleiten, und
- eine Alarmeinheit (24), die derart ausgebildet ist, ein Alarmsignal bereitzustellen, wenn die mitgehörten Daten von den gemäß dem Anfrageprofil (17, 17') erwarteten Daten abweichen, wobei das Anfrageprofil vorbestimmte Anfragen und ein Zeitschema, wann diese Anfragen an die mindestens eine Einrichtung im ersten Netzwerk verschickt werden sollen, enthält.

12. Vorrichtung nach Anspruch 11, wobei die Mithöreinheit (21) und/oder die Anfrageeinheit (14) derart ausgebildet sind, ein Alarmsignal zu erkennen und sich daraufhin selbstständig neu zu starten oder die Auswerteeinheit (13) derart ausgebildet ist, nach Erkennen des Alarmsignals eine Weitergabe oder ein Auslesen der mitgehörten Daten zu blockieren.

13. Vorrichtung nach einem der Ansprüche 11 oder 12, wobei die Auswerteeinheit (13) derart ausgebildet ist, mitgehörte Daten abzuspeichern, eine Überprüfung der Daten durchzuführen und erst nach einer erfolgreichen Überprüfung die Daten an eine Diagnoseeinrichtung (19) zu übermitteln.

14. Vorrichtung nach Anspruch 13, wobei die Auswerteeinheit (13) derart ausgebildet ist, zu überprüfen, ob die mitgehörten Daten dem Anfrageprofil (17, 17') entsprechen und/oder ob die mitgehörten Daten eine gültige kryptographische Prüfsumme aufweisen, und lediglich die erfolgreich überprüften Daten an die Diagnoseeinrichtung (19) zu übermitteln oder bei einer nicht erfolgreichen Überprüfung einen Ersatzwert oder eine Fehlernachricht an die Diagnoseeinrichtung (19) zu übermitteln.

15. Computerprogrammprodukt mit Programmbefehlen zur Ausführung eines Verfahrens gemäß den Ansprüchen 1-10.

## Claims

1. Method for the capture of data from at least one device (16.1, 16.2, 16.3), which is arranged in a first network (12) having a high security requirement, in a second network (11) having a low security requirement, by means of an apparatus containing a requesting unit (14), an eavesdropping unit (21), an evaluation unit (13) and an alarm unit (24), having the method steps of:
- requesting (2) the data from the at least one device (16.1, 16.2, 16.3) according to a request profile (17) by means of the requesting unit (14) which is arranged inside the first network (12),
- eavesdropping (3) the data transmitted from the at least one device (16.1, 16.2, 16.3) to the requesting unit (14) in response to the request inside the first network (12) by means of the eavesdropping unit (21), which is arranged within the first network (12), and transmitting the data to the evaluation unit (13), which is arranged in the second network (11),
- comparing (4) the eavesdropped data with the data expected according to the request profile (17, 17') by means of the evaluation unit, and
- providing (5) an alarm signal by means of the alarm unit if the eavesdropped data differ from the data expected according to the request profile (17, 17'),
the request profile (17, 17') containing predetermined requests and a timing scheme of when these requests are intended to be sent to the at least one device in the first network, the eavesdropping unit (21) only being able to eavesdrop data transmitted in the first network (11) and not being able to transmit any messages whatsoever to the devices (16.1, 16.2, 16.3) and also not being able to transmit any messages to the requesting unit (14), and the evaluation unit (13) checking the eavesdropped data against a request profile (17), which corresponds to the request profile (17') in the requesting unit (14), and forwarding only eavesdropped data which correspond to the request profile (17, 17') to a diagnostic computer (19) arranged in the second network (11).

2. Method according to Claim 1, an alarm message being displayed in the evaluation unit (13) and/or in a diagnostic device (19) in a diagnostic network (15) and/or an entry in a monitoring report being created and/or an active reaction being triggered in the eavesdropping unit (21) and/or an active reaction being triggered in the requesting unit (14) as a result of the alarm signal.

3. Method according to Claim 2, forwarding of the eavesdropped data by the evaluation unit (13) or reading of the eavesdropped data from the evaluation unit (13) being blocked as a result of the alarm signal.

4. Method according to one of Claims 1 to 3, the request profile (17) having different request rules for different types of data and/or for different types of devices and/or for individual devices (16.1, 16.2, 16.3).

5. Method according to one of Claims 1 to 4, the request profile (17) having a standard request rule for different types of data and/or for different types of devices and/or for the individual devices (16.1, 16.2, 16.3) themselves.

6. Method according to one of Claims 2 to 5, the eavesdropped data being buffered in the evaluation unit (13) and being transmitted to the diagnostic device (19) only after a successful check.

7. Method according to Claim 6, a successful check being present when the eavesdropped data correspond to the request profile (17, 17') and/or when the eavesdropped data have a valid cryptographic checksum.

8. Method according to Claim 6 or 7, a substitute value or an error message being transmitted to the diagnostic device (19) in the event of an unsuccessful check.

9. Method according to one of Claims 1 to 8, an item of validity information being assigned to the eavesdropped data in the evaluation unit (13) after a check.

10. Method according to one of Claims 1 to 9, the eavesdropped data being transmitted to the diagnostic computer (19) only when the eavesdropped data have been received in the evaluation unit (13) in a predetermined interval of time after the associated request.

11. Apparatus for the capture of data from at least one device (16.1, 16.2, 16.3), which is arranged in a first network (12) having a high security requirement, in a second network (11) having a low security requirement, containing
- a requesting unit (14) which is arranged inside the first network (12) and is designed to request data from the at least one device (16.1, 16.2, 16.3) according to a request profile (17, 17'),
- an eavesdropping unit (21) which is arranged inside the first network (12) and is designed to eavesdrop data which have been transmitted from the at least one device (16.1, 16.2, 16.3) in response to the request and to transmit said data to an evaluation unit (13) and to send no messages to the devices (16.1, 16.2, 16.3) and also no messages to the requesting unit (14),
- an evaluation unit (13) which is arranged in the second network (11) and is designed to compare the eavesdropped data with the data expected according to the request profile (17, 17'), and checks the eavesdropped data against a request profile (17), which corresponds to the request profile (17') in the requesting unit (14), and to forward only eavesdropped data which correspond to the request profile (17, 17') to a diagnostic computer (19) arranged in the second network, and
- an alarm unit (24) which is designed to provide an alarm signal if the eavesdropped data differ from the data expected according to the request profile (17, 17'), the request profile containing predetermined requests and a timing scheme of when these requests are intended to be sent to the at least one device in the first network.

12. Apparatus according to Claim 11, the eavesdropping unit (21) and/or the requesting unit (14) being designed to detect an alarm signal and to then independently restart, or the evaluation unit (13) being designed to block forwarding or reading of the eavesdropped data after the alarm signal has been detected.

13. Apparatus according to either of Claims 11 and 12, the evaluation unit (13) being designed to store eavesdropped data, to check the data and to transmit the data to a diagnostic device (19) only after a successful check.

14. Apparatus according to Claim 13, the evaluation unit (13) being designed to check whether the eavesdropped data correspond to the request profile (17, 17') and/or whether the eavesdropped data have a valid cryptographic checksum and to transmit only the successfully checked data to the diagnostic device (19) or to transmit a substitute value or an error message to the diagnostic device (19) in the event of an unsuccessful check.

15. Computer program product having program instructions for carrying out a method according to Claims 1-10.

## Revendications

1. Procédé de collecte de données d'au moins un dispositif (16.1, 16.2, 16.3), disposé dans un premier réseau (12) hautement sécurisé, dans un deuxième réseau (11) faiblement sécurisé, par un appareil contenant une unité de requête (14), une unité d'écoute (21), une unité d'analyse (13) et une unité d'avertissement (24), comprenant les étapes de procédé suivantes:
- demande (2) des données auprès du au moins un dispositif (16.1, 16.2, 16.3) correspondant à un profil de requête (17) par l'unité de requête (14), disposée à l'intérieur du premier réseau (12),
- écoute (3) des données envoyées sur la demande adressée à l'unité de requête (14) par le au moins un dispositif (16.1, 16.2, 16.3) à l'intérieur du premier réseau (12) par l'unité d'écoute (21), disposée à l'intérieur du premier réseau (12), et transmission des données à l'unité d'analyse (13), disposée dans le deuxième réseau (11),
- comparaison (4) des données écoutées avec les données attendues conformément au profil de requête (17, 17') par l'unité d'analyse, et
- apprêtement (5) d'un signal d'avertissement par l'unité d'avertissement quand les données écoutées s'écartent des données attendues conformément au profil de requête (17, 17'),
le profil de requête (17, 17') contenant des requêtes prédéfinies et un schéma temporel relatif au moment où ces requêtes doivent être envoyées au au moins un dispositif dans le premier réseau, l'unité d'écoute (21) n'écoutant que les données, transmises dans le premier réseau (11) et en aucun cas ne pouvant envoyer de messages aux dispositifs (16.1, 16.2, 16.3) ni non plus de messages à l'unité de requête (14), et l'unité d'analyse (13) examinant les données écoutées par rapport au profil de requête (17), correspondant au profil de requête (17') dans l'unité de requête (14) et ne transférant que les données écoutées qui correspondent au profil de requête (17, 17'), à un ordinateur de diagnostic (19) situé dans le deuxième réseau (11).

2. Procédé selon la revendication 1, une notification d'avertissement dans l'unité d'analyse (13) et/ou dans un dispositif de diagnostic (19) s'affichant dans un réseau de diagnostic (15) par le signal d'avertissement et/ou une entrée étant établie dans un rapport de surveillance et/ou une réaction active étant lancée dans l'unité d'écoute (21) et/ou une réaction active étant lancée dans l'unité de requête (14).

3. Procédé selon la revendication 2, par le signal d'avertissement, le transfert des données écoutées étant bloqué par l'unité d'analyse (13) ou l'extraction des données écoutées de l'unité d'analyse (13) étant bloquée.

4. Procédé selon l'une des revendications 1 à 3, le profil de requête (17) comportant, pour différents types de données et/ou pour différents types de dispositifs et/ou pour certains dispositifs (16.1, 16.2, 16.3), différentes règles de requête.

5. Procédé selon l'une des revendications 1 à 4, le profil de requête (17) comportant, pour différents types de données et/ou pour différents types de dispositifs et/ou pour les dispositifs eux-mêmes (16.1, 16.2, 16.3), une règle de requête commune.

6. Procédé selon l'une des revendications 2 à 5, les données écoutées dans l'unité d'analyse (13) étant temporairement stockées et seulement transmises après un examen concluant au dispositif de diagnostic (19).

7. Procédé selon la revendication 6, un examen concluant étant avéré quand les données écoutées correspondent au profil de requête (17, 17') et/ou quand les données écoutées comportent un total de contrôle cryptographique valable.

8. Procédé selon la revendication 6 ou 7, en cas d'examen non concluant, une valeur de remplacement ou une notification d'erreur étant transmise au dispositif de diagnostic (19).

9. Procédé selon l'une des revendications 1 à 8, une information de validité étant subordonnée aux données écoutées dans l'unité d'analyse (13) après un examen.

10. Procédé selon l'une des revendications 1 à 9, les données écoutées n'étant transmises à l'ordinateur de diagnostic (19) que lorsque les données écoutées sont reçues dans l'unité d'analyse (13) dans un intervalle de temps prédéfini après la requête subordonnée.

11. Appareil de collecte de données d'au moins un dispositif (16.1, 16.2, 16.3), disposé dans un premier réseau (12) hautement sécurisé, dans un deuxième réseau (11) faiblement sécurisé, contenant
- une unité de requête (14) située à l'intérieur du premier réseau (12) et réalisée pour demander des données correspondant à un profil de requête (17, 17') auprès du au moins un dispositif (16.1, 16.2, 16.3),
- une unité d'écoute (21) située à l'intérieur du premier réseau (12) et réalisée pour écouter les données envoyées sur la demande par le au moins un dispositif (16.1, 16.2, 16.3), et les transmettre à une unité d'analyse (13) et n'envoyer en aucun cas ni de messages aux dispositifs (16.1, 16.2, 16.3) ni aucun message à l'unité de requête (14),
- une unité d'analyse (13) située dans le deuxième réseau (11) et réalisée pour comparer les données écoutées avec les données attendues conformément au profil de requête (17, 17'), et examiner les données écoutées par rapport à un profil de requête (17), qui correspond au profil de requête (17') dans l'unité de requête (14) et ne transférer que les données écoutées qui correspondent au profil de requête (17, 17'), à un ordinateur de diagnostic (19) situé dans le deuxième réseau, et
- une unité d'avertissement (24) réalisée pour apprêter un signal d'avertissement quand les données écoutées s'écartent des données attendues conformément au profil de requête (17, 17'), le profil de requête contenant des requêtes prédéfinies et un schéma temporel relatif au moment où ces requêtes doivent être envoyées au au moins un dispositif dans le premier réseau.

12. Appareil selon la revendication 11, l'unité d'écoute (21) et/ou l'unité de requête (14) étant réalisées pour reconnaître un signal d'avertissement et redémarrer automatiquement à celui-ci, ou l'unité d'analyse (13) est réalisée pour bloquer, après reconnaissance du signal d'avertissement, le transfert ou l'extraction des données écoutées.

13. Appareil selon l'une des revendications 11 ou 12, l'unité d'analyse (13) étant réalisée pour stocker en mémoire les données écoutées, exécuter un examen des données et ne transmettre les données à un dispositif de diagnostic (19) qu'après un examen concluant.

14. Appareil selon la revendication 13, l'unité d'analyse (13) étant réalisée pour examiner si les données écoutées correspondent au profil de requête (17, 17') et/ou si les données écoutées présentent une somme de contrôle cryptographique valable, et pour ne transmettre au dispositif de diagnostic (19) que les données examinées concluantes ou, en cas d'examen non concluant, transmettre au dispositif de diagnostic (19) une valeur de remplacement ou un message d'erreur.

15. Produit de programme informatique avec des instructions de programme pour l'exécution d'un procédé selon les revendications 1-10.
